Europäisches Patentamt

(19) European Patent Office

Office européen des brevets

(11) Publication number : 0 473 334 B1

(12) EUROPEAN PATENT SPECIFICATION

(45) Date of publication of patent specification :
01.06.94 Bulletin 94/22

(51) Int. Cl.⁵ : G21C 3/328

(21) Application number : 91307511.5

(22) Date of filing : 14.08.91

(54) Nuclear fuel assembly and nuclear reactor core.

(30) Priority : 29.08.90 JP 225079/90

(43) Date of publication of application :
04.03.92 Bulletin 92/10

(45) Publication of the grant of the patent :
01.06.94 Bulletin 94/22

(84) Designated Contracting States :
BE DE FR GB

(56) References cited :
FR-A- 2 154 753
US-A- 3 745 069
US-A- 3 933 582

(73) Proprietor : HITACHI, LTD.
6, Kanda Surugadai 4-chome
Chiyoda-ku, Tokyo 101 (JP)

Proprietor : Hitachi Engineering Co., Ltd.
2-1, Saiwai-cho
3-chome
Hitachi-shi Ibaraki 317 (JP)

(72) Inventor : Fujita, Satoshi
7-1, Ariake-cho 2-chome
Takahagi-shi, Ibaraki 318 (JP)
Inventor : Mochida, Takaaki
2-1 Jyounan-cho 3-chome
Hitachi-shi, Ibaraki 317 (JP)
Inventor : Sekine, Nobuo
204, 4-3, Oomika-cho 6-chome
Hitachi-shi, Ibaraki 319-12 (JP)

(74) Representative : Paget, Hugh Charles Edward
et al
MEWBURN ELLIS
York House
23 Kingsway
London WC2B 6HP (GB)

## Description

The present invention relates to a nuclear fuel assembly for a nuclear reactor, and is particularly applicable to a fuel assembly which is for use in a boiling-water reactor and which contains fissile plutonium. The invention also relates to a nuclear reactor core containing at least one such assembly, especially a boiling-water reactor core. The present invention is concerned with the distribution of plutonium in a fuel assembly.

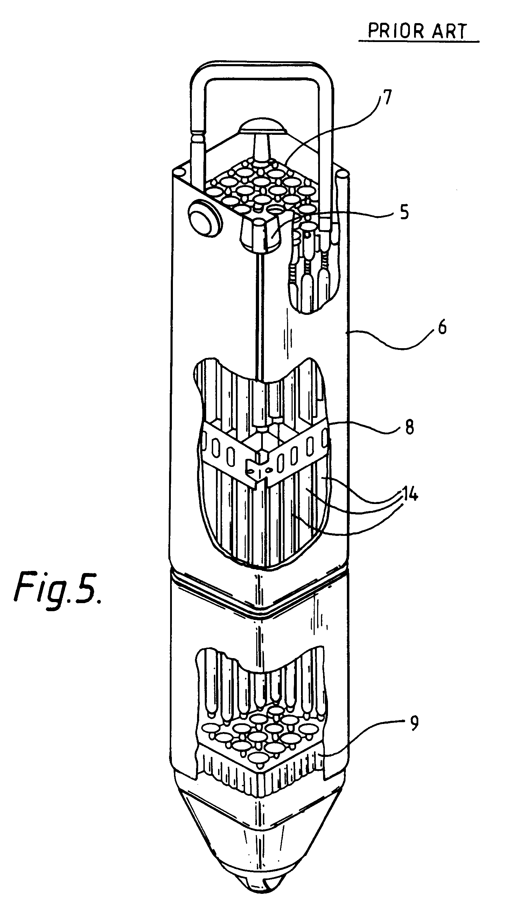

Fig. 5 of the accompanying drawings illustrates the structure of a conventional fuel assembly used in a boiling-water reactor, and shows an upper tie plate 7, a channel fastener 5 at one corner of the upper tie plate, a channel box 6, a spacer 8, a lower tie plate 9, and a plurality of fuel rods 14 which extend vertically and are located by the tie plates in a square array.

In the reactor core of the D-lattice type of a boiling-water reactor, the water gaps adjacent the fuel assembly are not the same on all four sides, i.e. the gap on the two sides (control rod sides) where control rods are inserted, is wider than the gap on the two sides (control rod-free sides) where no control rod is inserted. On the wide gap sides, therefore, the moderator (water) flow-path area is large on the outside of the channel box 13 and the effect of slowing-down of the neutrons is obtained to a great degree. Therefore, the power of the fuel rods 14 in the fuel assembly 12 tends to become larger on the wide gap side and smaller on the narrow gap side.

It has for many years been proposed that plutonium shall be used as a fissile material in nuclear reactor cores, particularly in view of the amount of plutonium becoming available from fuel reprocessing and in order to reduce use of uranium. Typically, the plutonium available for use in a fuel assembly of a reactor has a content of about 70% of the fissile isotopes $^{239}$Pu and $^{241}$Pu. For such use, it is proposed that plutonium is in the form of mixed oxides of uranium and plutonium, herein referred to as MOX.

US-A-3933582 shows a fuel assembly adjacent a control rod, having plutonium-containing fuel rods surrounding a single rod containing a burnable poison. The aim in this proposal is to increase the initial power adjacent the rod containing burnable poison, in order to compensate for the reduced power density caused by the burnable poison. The fuel rods containing plutonium are described as having 1.2 atom % fissile Pu and 1.8 % fissile U.

JP-A-63-149588 shows some fuel assemblies in which plutonium-containing fuel rods, all having the same plutonium enrichment amount, and burnable poison rods are distributed symmetrically with respect to the two diagonals of the square array. This is an example of the so-called island type fuel assembly discussed more below.

JP-A-2-245693 published 1 October 1990 (corresponding to USSN 496309 filed 20 March 1990 and EP-A-389219 published 26th September 1990) is mentioned because it is concerned with distribution of fissile material in the fuel assembly having regard to the effect of the wide and narrow water gaps. Fig. 5 of this publication shows a uranium fuel distribution in which more burnable poison rods are located closer to the wide water gap and the fissile uranium content per fuel rod is higher at the narrow water gap side. A large number of different types of rod are employed in this arrangement.

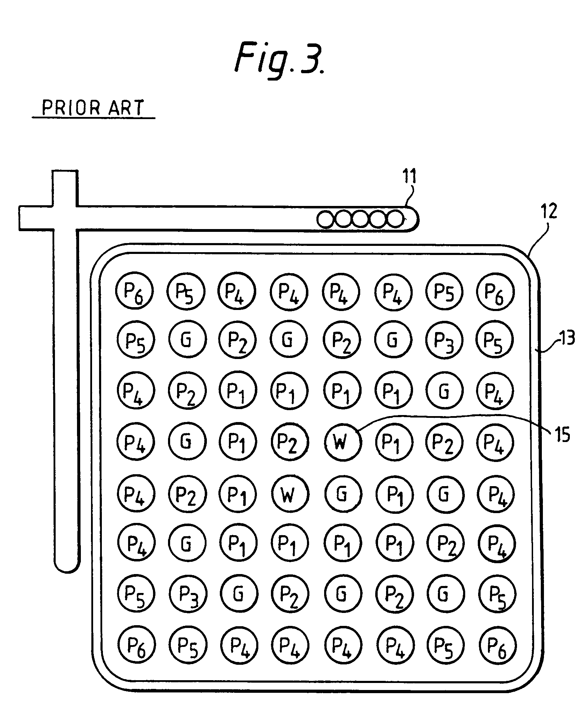

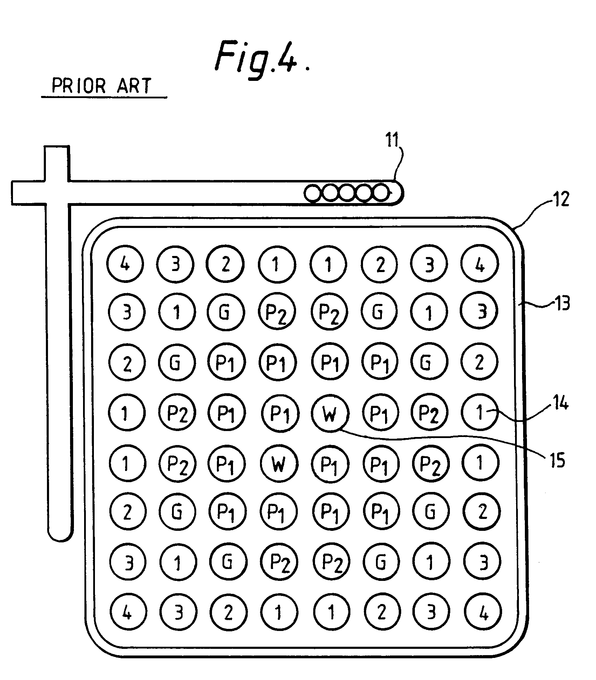

Figs. 3 and 4 of the present drawings illustrate the distribution of plutonium enrichment and of uranium enrichment of two previously proposed fuel assemblies which contain MOX fuel.

Fig. 3 shows the distribution of plutonium and uranium enrichment of an MOX fuel assembly of the so-called discrete type illustrated in JP-A-61-147184. Fig. 3 shows a control rod 11 and an MOX fuel assembly 12 which consists of a channel box 13, fuel rods 14 and water rods 15. The fuel rods 14 indicated $P_1$ to $P_6$ are those in which plutonium oxide is present in uranium oxide (MOX fuel rods) and the fuel rods indicated G are the uranium fuel rods that contain gadolinium (these fuel rods in a new fuel assembly prior to burn-up contain uranium but do not contain plutonium). The smaller the number of the subscript of the indicators $P_1$ to $P_6$, the higher the enrichment of plutonium and uranium ($^{235}$U) in the rod. Except for one G rod which replaces one $P_2$ rod, the rod arrangement here is symmetrical about the diagonal line joining the two corners at which the control rod sides meet the non-control rod sides.

Fig. 4 shows the distribution of plutonium and uranium enrichment of an MOX fuel assembly of the so-called island type illustrated in JP-A-62-276492. The fuel rods 14 indicated 1 to 4 in Fig. 4 are the uranium-enriched fuel rods, the smaller numerals representing higher enrichment amounts of uranium. Further, $P_1$ to $P_2$ denote MOX fuel rods, rod $P_1$ having higher plutonium content than rod $P_2$. The rods indicated G are uranium fuel rods that contain gadolinium. This fuel rod arrangement is symmetrical about the diagonal line mentioned above.

The MOX fuel assembly of the discrete type makes it possible to increase the plutonium loading of the assembly but requires an increased variety of the rods having plutonium enrichment. On the other hand, the MOX fuel assembly of the island type makes it possible to decrease the variety of the plutonium enrichment in contrast to the discrete type, but permits plutonium to be loaded only in reduced amounts.

In the MOX fuel assembly, in general, the neutron spectrum is harder than that of the $UO_2$ fuel assemblies, and the worth of gadolinium which is a burnable poison is considerably different from that of the case of the $UO_2$ fuel assemblies. That is to say, the absorption cross-section of gadolinium is large for the thermal neutron energy but is small for higher neutron energies. Therefore, as the neutron spectrum becomes hard, the reactivity worth of gadolinium decreases and, at the same time, the combustion rate of gadolinium becomes small. In the MOX fuel assembly, therefore, the concentration of gadolinium is selected to be lower than that of a $UO_2$ assembly (i.e. a new $UO_2$ fuel assembly not containing plutonium), and an increased number of gadolinium-containing fuel rods are used.

The object of the present invention is to provide a fuel assembly which is capable of permitting increase of the amount of plutonium which can be loaded in the assembly while avoiding a large number of different types of rods having plutonium enrichment.

According to the invention, there is provided a nuclear fuel assembly for a nuclear reactor having a plurality of vertically extending fuel rods arranged side by side in a square array. This square array has two first sides which, in the intended arrangement of the fuel assembly in a reactor core, are adjacent a control rod region and two second sides which are not adjacent such a control rod region. Before start of burn-up of the fuel of the fuel assembly a plurality of the rods contain fissile plutonium and a plurality of the rods contain a burnable poison. When the array is considered as divided by a diagonal line connecting the two corners thereof at each of which one first side meets one second side so as to define a first region lying between this diagonal line and the first sides and a second region lying between this diagonal line and the second sides, (a) the average fissile plutonium enrichment in the fuel rods containing plutonium is lower in the first region than the second region, and (b) the number of the fuel rods containing burnable poison is higher in the first region than in the second region.

Preferably the average fissile plutonium enrichment in said fuel rods containing plutonium in the fuel assembly is at least 2% by weight.

Where a uranium-containing fuel rod is enriched with fissile plutonium, the amount of fissile uranium present is preferably not more than about 1%, i.e. the uranium used is natural (fissile content 0.7%), depleted (fissile content 0.2%) or from reprocessing (fissile content 1.0%).

As described above, the average plutonium enrichment in the first region of the fuel assembly of the invention is smaller than that of the second region, and fuel rods containing burnable poison are arranged in the first region in a number greater than in the second region, contributing to improvement of the fuel characteristics as described below.

The first region of the fuel assembly, neighbouring the wide water gap, has a large moderator flow-path area on the outside of the channel box, and exhibits an increased effect of slowing down of neutrons. Therefore, local power peaking tends to be high in the first region and low in the second region which faces the narrow gap. In order to suppress such local power peaking, in the present invention, the average plutonium enrichment is reduced in the first region and increased correspondingly in the second region, while preserving a high average plutonium enrichment of the fuel assembly. This enables the local power peaking to be reduced in the first region and to be increased in the second region, so that the power distribution is flattened.

Next, by utilizing a difference in the average plutonium enrichment between the first region and the second region, fuel rods containing burnable poison are arranged in larger number in the first region in order to prevent the reactivity worth of gadolinium which is typically the burnable poison from decreasing. That is, a decrease in the average plutonium enrichment in the first region where an increased slowing of neutrons is exhibited, results in a decrease in the hardening of the neutron spectrum in the first region and an increase in the hardening of the neutron spectrum in the second region. It is not desirable to arrange the fuel rods containing gadolinium in the second region, since the reactivity worth of gadolinium decreases and fuel rods containing gadolinium have to be arranged in an increased number causing the plutonium loading amount to be decreased overall in the assembly. The reactivity worth of gadolinium does not decrease, or not so much, in the first region. Therefore the number of fuel rods containing burnable poison required in the first region is less than is required in the second region, to achieve the same reactivity worth. Therefore, when there are more rods containing burnable poison in the first region than in the second region, the amount of plutonium in the assembly can be greater. The number of rods containing burnable poison in the second region may be zero.

Furthermore, in the assembly shown in Fig. 3, the number of types of plutonium enrichment was high, in order to flatten the local power peaking of fuel rods of the outermost portion of the first region neighbouring the wide gap. By arranging the fuel rods containing burnable poison in the first region according to the present invention, however, the power distribution in the first region is suppressed, so that local power peaking of fuel rods of the outermost portion of the first region neighbouring the wide gap is flattened, and the number of different types of plutonium enrichment can be kept low.

Preferably the rods containing burnable poison also contain fissile uranium in an enriched amount, and contain no plutonium.

In order to reduce further the number of types of rod containing plutonium, at least one of the rods may contain fissile uranium but no fissile plutonium and no burnable poison.

Furthermore, apart from said rods containing burnable poison, all the rods containing fissile material may contain not more than 1% of fissile uranium.

By the invention, the number of different types of said fuel rods containing fissile plutonium, differentiated according to content of fissile plutonium, can be not more than four.

In a preferred embodiment, the second region contains a plurality of the rods each having a maximum fissile plutonium concentration among all the rods in the assembly, there being more of such rods having this maximum concentration in the second region than in the first region. Furthermore, the second region may contain a plurality of the rods each containing a higher enrichment of plutonium than any rod in the first region.

Preferably, the ratio of the total amount of fissile plutonium in the second region to the total amount of fissile plutonium in said fuel assembly is not less than 0.65, more preferably not less than 0.7.

The invention will now be described with reference to the accompanying drawings, in which:-

Figs. 1 and 2 are horizontal sectional views illustrating diagrammatically MOX fuel assemblies according to two embodiments of the present invention, respectively;

Figs. 3 and 4 are horizontal sectional views of two previously proposed MOX fuel assemblies already described; and

Fig. 5 is a partly cut-away perspective view of a boiling-water reactor fuel assembly, already described.

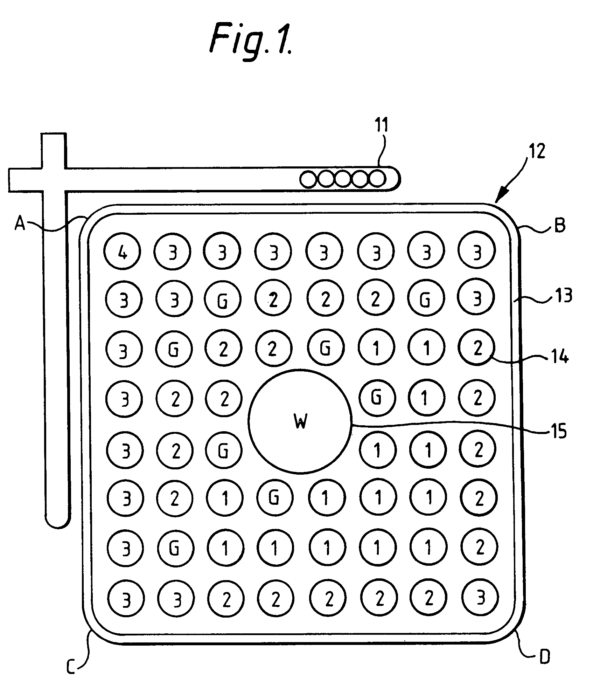

The fuel assembly 12 of the present invention shown in Fig. 1 together with a control rod 11 has a channel box 13, fuel rods 14 and a central water rod 15. The appearance of the fuel assembly 12 is the same as that of Fig. 5. This fuel assembly 12 in its new state having a burn-up of 0 GWd/t contains enrichments of fissile material and burnable poison as set out in the Table below. The fuel rods 14 are filled with either pellets consisting of an MOX fuel or pellets of enriched uranium oxide not containing plutonium but admixed with gadolinium. The fuel rods 14 bearing reference numbers 1 to 4 are MOX fuel rods. The smaller the reference number, the higher the plutonium enrichment. Further, the fuel rods indicated G are those which are filled with the above-mentioned pellets of enriched uranium oxide containing gadolinium.

## TABLE

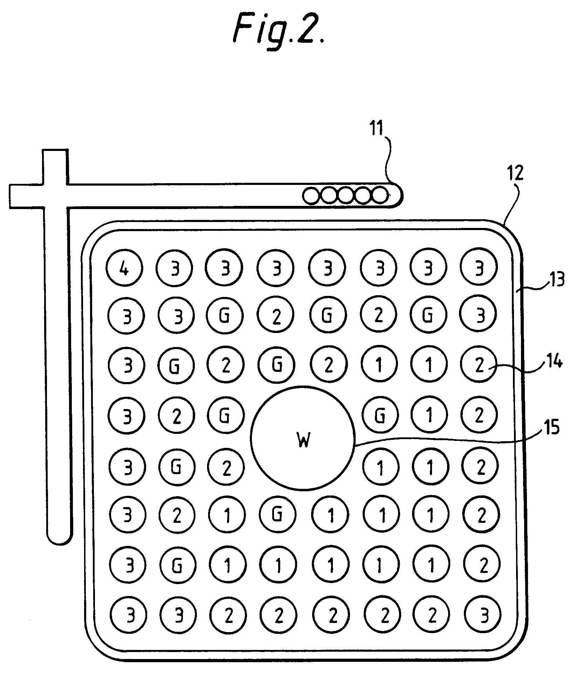

Content of oxides in the fuel rods
of Figs. 1 and 2 (% by weight)

| Rod type* | Content of U-235 | Content of $Gd_2O_3$ | Content of fissile Pu as oxide |
|---|---|---|---|
| 1 | 0.7 | - | 5.2 |
| 2 | 0.7 | - | 3.3 |
| 3 | 0.7 | - | 1.0 |
| 4 | 0.7 | - | 0.7 |
| G | 3.9 | 2.0 | - |

\* corresponds to the reference indicators used in Figs. 1 and 2

When the fuel assembly 12 is loaded in the core, the channel fastener 5 is positioned at the corner A on the side of the control rod 11, i.e. positioned on the side of wide gap. The function of the channel fastener, as is well known, is to maintain two adjacent fuel assemblies spaced apart, so as to provide the wide gap. In Fig. 1, the channel fastener 5 is positioned at a corner A and is mounted on the upper tie plate 4.

The cross-section of the fuel assembly 12 can be divided notionally into a first region and a second region by a diagonal line connecting the two opposing corners B and C where the channel fastener 5 is not located, the first region being on the side of the corner A from the diagonal line and the second region being on the side of the corner D from the diagonal line. No channel fastener 5 is positioned on the corner D that is included in the second region.

The fuel assembly 12 of Fig. 1 has a distribution of the plutonium enrichment such that fuel rods 1 having the highest enrichment are arranged in the second region (region of the side of narrow gap) together with rods 2 and 3 having an intermediate enrichment which are arranged along the outermost periphery and at peripheral corner portions. In the first region (region of the wide gap), a fuel rod 4 having the lowest plutonium enrichment is disposed closest to the corner A, and fuel rods 3 having intermediate enrichment are arranged along the outermost peripheral portions. Fuel rods 2 having the higher intermediate enrichment are arranged along in second row and third row from the periphery. By employing such a distribution of the plutonium enrichment, a difference is imparted in the average plutonium enrichment (per fuel rod containing plutonium) between the first region at the side of the wide gap and the second region at the side of narrow gap. The average enrichment is lower in the first region than in the second region. The fuel rods G containing gadolinium are arranged in a larger number in the first region. The average plutonium enrichment per fuel rod containing plutonium in the whole fuel assembly is 3.0%.

Another embodiment of the present invention is shown in Fig. 2 in the same manner as in Fig. 1. The content of the fuel rods of Fig. 2 is also given in the Table above. Fig. 2 has the difference that the number of gadolinium-containing fuel rods G is increased from the eight of Fig. 1 to ten. There is again a difference in the average plutonium enrichment between the first region of the side of the wide gap (where the average enrichment is lower) and the second region at the side of narrow gap in the assembly (where the average enrichment is higher), as in Fig. 1. When there are employed an increased number of gadolinium-containing fuel rods G, these rods are arranged in as large a number as possible in the first region, and the remainder is arranged near the water rod in the region of the side of narrow gap.

In these two embodiments, the following ratio:

$$\frac{\text{Total fissile Pu in the second region}}{\text{Total fissile Pu}}$$

is 0.72 in Fig. 1 and 0.75 in Fig. 2.

In the embodiments of Figs. 1 and 2, MOX fuel rods are used except for the fuel rods of uranium oxide admixed with gadolinium, making it possible to achieve a high plutonium load in each MOX fuel assembly. Moreover, the number of the different types of plutonium enrichment in the MOX fuel assembly can be decreased from six in the MOX fuel assembly of the discrete type of Fig. 3 to four. When plutonium is used as the fuel, on account of the more acute hazards, the fuel pellets are manufactured in a completely sealed container (glove box). Therefore, a longer time is necessary to wash the glove box when the level of the plutonium enrichment is to be changed than in the case of uranium, causing the operation efficiency to be decreased during the production. For this reason it is preferred to use a different production line for each different level of plutonium enrichment, so that a decrease in the variety of the plutonium enrichment in the MOX fuel assembly helps decrease the cost and time required for producing the MOX fuel assembly.

It should be noted that the present invention is not limited to the aforementioned embodiments only. For instance, there may be employed only three different plutonium enrichment types of the MOX fuel rods by replacing the MOX fuel rod 4 having the lowest enrichment at the corner portion A by an enriched uranium fuel rod. Even in this case, the plutonium load can be maintained nearly at the same high value per MOX fuel assembly, which enabling the cost of molding the MOX fuel to be decreased.

Furthermore, the present invention can be applied when the arrangement of fuel rods in the uranium fuel assembly is changed from the illustrated 8-row x 8-column arrangement into the known 9-row x 9-column arrangement.

## Claims

1. A nuclear fuel assembly for a nuclear reactor having a plurality of vertically extending fuel rods (14) arranged side by side in a square array, said square array having two first sides which, in the intended arrangement of the fuel assembly in a reactor core, are adjacent a control rod region (11) and two second sides which are not adjacent a control rod region, wherein before start of burn-up of the fuel of the fuel assembly a plurality (1,2,3,4) of said rods (14) contain fissile plutonium and a plurality (G) of said rods contain a burnable poison, characterised in that, considering said array as divided by a diagonal line connecting the two corners (B,C) thereof at which one said first side meets one said second side so as to

EP 0 473 334 B1

define a first region lying between said diagonal line and said first sides and a second region lying between said diagonal line and said second sides,

(a) the average fissile plutonium enrichment in the fuel rods (1,2,3,4) containing plutonium is lower in said first region than said second region and

(b) the number of said rods (G) containing burnable poison is higher in said first region than said second region.

2. A nuclear fuel assembly according to claim 1 in which the average fissile plutonium enrichment in said fuel rods (1,2,3,4) containing plutonium in the fuel assembly is at least 2% by weight.

3. A nuclear fuel assembly according to claim 1 or claim 2 wherein said rods containing burnable poison also contain fissile uranium in an enriched amount, and contain no plutonium.

4. A nuclear fuel assembly according to any one of claims 1 to 3 wherein at least one of said rods (14) contains fissile uranium but no fissile plutonium and no burnable poison.

5. A nuclear fuel assembly according to any one of claims 1 to 4 wherein said rods (1,2,3,4) containing fissile plutonium each contain at most 1% of fissile uranium.

6. A nuclear fuel assembly according to any one of claims 1 to 5 wherein, apart from said rods (G) containing burnable poison, all said rods containing fissile material contain not more than 1% of fissile uranium.

7. A nuclear fuel assembly according to claim 6 wherein the number of different types of said fuel rods (1,2,3,4) containing fissile plutonium, differentiated according to content of fissile plutonium, is not more than four.

8. A nuclear fuel assembly according to any one of claims 1 to 7 wherein said rods (1,2,3,4) containing fissile plutonium contain mixed oxides of uranium and plutonium.

9. A nuclear fuel assembly according to any one of claims 1 to 8 wherein said second region contains a plurality of said rods (1) each having a maximum fissile plutonium concentration among all the rods in the assembly, there being more of said rods (1) having said maximum concentration in said second region than in said first region.

10. A nuclear fuel assembly according to claim 9 wherein said second region contains a plurality of said rods (1) each containing a higher enrichment of plutonium than any rod in said first region.

11. A nuclear fuel assembly according to any one of claims 1 to 10 having a channel fastener (5) at the corner (A) of said square array at which said two first sides meet.

12. A nuclear fuel assembly according to any one of claims 1 to 11 wherein the ratio of the total amount of fissile plutonium in said second region to the total amount of fissile plutonium in said fuel assembly is not less than 0.65.

13. A nuclear reactor core containing a fuel assembly and having a control rod region adjacent said fuel assembly, said fuel assembly being in accordance with any one of claims 1 to 12.

**Patentansprüche**

1. Kernreaktorbrennelement für einen Kernreaktor mit mehreren sich vertikal erstreckenden Brennstäben (14), die nebeneinander in einem quadratischen Feld angeordnet sind, wobei das quadratische Feld zwei erste Seiten, die für die beabsichtigte Anordnung des Brennelements in einer Reaktorspaltzone einem Steuerstabbereich (11) benachbart sind, und zwei zweite Seiten aufweist, die keinem Steuerstabbereich benachbart sind, wobei vor dem Start des Abbrennens des Brennstoffs des Brennelements mehrere (1, 2, 3, 4) der Stäbe (14) spaltbares Plutonium und mehrere (G) der Stäbe ein brennbares Reaktorgift enthalten, **dadurch gekennzeichnet,** daß, wenn das Feld als durch eine Diagonale unterteilt angesehen wird, die diejenigen seiner zwei Ecken (B, C) verbindet, an denen die eine erste Seite auf die eine zweite Seite trifft, um einen ersten Bereich, der zwischen der Diagonale und den ersten Seiten liegt, und einen zweiten Bereich festzulegen, der zwischen der Diagonale und den zweiten Seiten liegt,

6

(a) die mittlere Anreicherung spaltbaren Plutoniums in den Plutonium enthaltenden Brennstäben (1, 2, 3, 4) im ersten Bereich kleiner als im zweiten Bereich ist und

(b) die Anzahl der brennbares Reaktorgift enthaltenden Stäbe (G) im ersten Bereich höher als im zweiten Bereich ist.

2. Kernreaktorbrennelement nach Anspruch 1, bei dem die mittlere Anreicherung spaltbaren Plutoniums in den Plutonium enthaltenden Brennstäben (1, 2, 3, 4) im Brennelement mindestens zwei Gewichtsprozeß beträgt.

3. Kernreaktorbrennlement nach Anspruch 1 oder Anspruch 2, bei dem die brennbares Reaktorgift enthaltenden Stäbe auch spaltbares Uran in angereicherter Menge, aber kein Plutonium enthalten.

4. Kernreaktorbrennelement nach einem der Ansprüche 1 bis 3, bei dem mindestens einer der Stäbe (14) spaltbares Uran, jedoch kein spaltbares Plutonium und kein brennbares Reaktorgift enthält.

5. Kernreaktorbrennelement nach einem der Ansprüche 1 bis 4, bei dem die spaltbares Plutonium enthaltenden Stäbe (1, 2, 3, 4) jeweils höchstens 1 % spaltbares Uran enthalten.

6. Kernreaktorbrennelement nach einem der Ansprüche 1 bis 5, bei dem außer den brennbares Reaktorgift enthaltenden Stäben (G) alle spaltbares Material enthaltenden Stäbe nicht mehr als 1 % spaltbares Uran enthalten.

7. Kernreaktorbrennelement nach Anspruch 6, bei dem die Anzahl verschiedener Typen spaltbares Plutonium enthaltender Brennstäbe (1, 2, 3, 4), wie sie abhängig vom Gehalt spaltbaren Plutoniums unterschieden werden, nicht größer als vier ist.

8. Kernreaktorbrennelement nach einem der Ansprüche 1 bis 7, bei dem die spaltbares Plutonium enthaltenden Stäbe (1, 2, 3, 4) Mischoxide aus Uran und Plutonium enthalten.

9. Kernreaktorbrennelement nach einem der Ansprüche 1 bis 8, bei dem der zweite Bereich mehrere der Stäbe (1) enthält, von denen jeder die maximale Konzentration spaltbaren Plutoniums unter allen Stäben im Element aufweist, wobei von diesen Stäben (1) mit der maximalen Konzentration im zweiten Bereich mehr als im ersten Bereich sind.

10. Kernreaktorbrennelement nach Anspruch 9, bei dem der zweite Bereich mehrere der Stäbe (1) enthält, die eine höhere Anreicherung an Plutonium als jeder Stab im ersten Bereich enthalten.

11. Kernreaktorbrennelement nach einem der Ansprüche 1 bis 10 mit einer Kanalbefestigung (5) an demjenigen Eck (A) des quadratischen Feldes, an dem sich die zwei ersten Seiten treffen.

12. Kernreaktorbrennelement nach einem der Ansprüche 1 bis 11, bei dem das Verhältnis der Gesamtmenge spaltbaren Plutoniums im zweiten Bereich zur Gesamtmenge spaltbaren Plutoniums im Brennelement nicht kleiner als 0,65 ist.

13. Kernreaktorspaltzone, die ein Brennelement und einen Steuerstabbereich neben dem Brennelement aufweist, wobei das Brennelement ein solches gemäß einem der Ansprüche 1 ist.

## Revendications

1. Assemblage combustible nucléaire pour un réacteur nucléaire possédant une pluralité de barres de combustible verticales (14) disposées côte-à-côte selon un réseau carré, ledit réseau carré possédant deux premiers côtés qui, dans l'agencement prévu de l'assemblage combustible dans un coeur de réacteur, sont adjacents à une région (11) de barre de commande, et deux seconds côtés qui ne sont pas adjacents à une région de barre de commande, et dans lequel avant le démarrage de la combustion du combustible de l'assemblage combustible, une pluralité (1, 2, 3, 4) desdites barres (14) contiennent du plutonium fissile et une pluralité (G) desdites barres contiennent un poison combustible, caractérisé en ce que, en considérant ledit réseau comme divisé par une diagonale reliant les deux coins (B, C) du réseau, au niveau desquels l'un desdits premiers côtés rencontre l'un desdits seconds côtés de manière à définir une première région située entre ladite diagonale et lesdits premiers côtés et une seconde région

situate entre ladite diagonale et lesdits seconds côtés,

(a) l'enrichissement moyen en plutonium fissile dans les barres de combustible (1, 2, 3, 4) contenant du plutonium est plus faible dans ladite première région que dans ladite seconde région, et

(b) le nombre desdites barres (G) contenant le poison combustible est plus élevé dans ladite première région que dans ladite seconde région.

2. Assemblage combustible nucléaire selon la revendication 1, dans lequel l'enrichissement moyen en plutonium fissile dans lesdites barres de combustible (1, 2,3,4) contenant du plutonium dans l'assemblage combustible est égal au moins à 2 % en poids.

3. Assemblage combustible nucléaire selon la revendication 1 ou 2, dans lequel lesdites barres contenant le poison combustible contiennent également de l'uranium fissile en une quantité enrichie, et ne contiennent pas de plutonium.

4. Assemblage combustible nucléaire selon l'une quelconque des revendications 1 à 3, dans lequel au moins l'une desdites barres (14) contient de l'uranium fissile, mais ne contient pas de plutonium fissile et ne contient aucun poison combustible.

5. Assemblage combustible nucléaire selon l'une quelconque des revendications 1 à 4, dans lequel lesdites barres (1,2,3,4) contenant du plutonium fissile contiennent chacune au plus 1 % d'uranium fissile.

6. Assemblage combustible nucléaire selon l'une quelconque des revendications 1 à 5, dans lequel, en dehors desdites barres (G) contenant un poison combustible, toutes lesdites barres contenant une matière fissile ne contiennent pas plus de 1 % d'uranium fissile.

7. Assemblage combustible nucléaire selon la revendication 6, dans lequel le nombre de types différents desdites barres de combustible (1,2,3,4) contenant du plutonium fissile, différenciées en fonction de la teneur en plutonium fissile, n'est pas supérieur à quatre.

8. Assemblage combustible nucléaire selon l'une quelconque des revendications 1 à 7, dans lequel lesdites barres (1,2,3,4) contenant du plutonium fissile contiennent des oxydes mixtes d'uranium et de plutonium.

9. Assemblage combustible nucléaire selon l'une quelconque des revendications 1 à 8, dans lequel ladite seconde région contient une pluralité desdites barres (1) possédant chacune une concentration maximale en plutonium fissile parmi toutes les barres de l'assemblage, lesdites barres (1) possédant ladite concentration maximale étant présentes en un plus grand nombre dans ladite seconde région que dans ladite première région.

10. Assemblage combustible nucléaire selon la revendication 9, dans lequel ladite seconde région contient une pluralité desdites barres (1) contenant chacune un enrichissement plus élevé en plutonium que n'importe quelle barre de ladite première région.

11. Assemblage combustible nucléaire selon l'une quelconque des revendications 1 à 10 comportant un dispositif de fixation de canal (5) au niveau du coin (A) dudit réseau carré, au niveau duquel lesdits deux premiers côtés se rejoignent.

12. Assemblage combustible nucléaire selon l'une quelconque des revendications 1 à 11, dans lequel le rapport de la quantité totale de plutonium fissile dans ladite seconde région à la quantité totale de plutonium fissile dans ledit assemblage combustible n'est pas inférieur à 0,65.

13. Coeur de réacteur nucléaire contenant un assemblage combustible et possédant une région de barres de commande adjacente audit assemblage combustible, ledit assemblage combustible étant agencé selon l'une quelconque des revendications 1 à 12.

# Fig.1.

# Fig.2.

# Fig.3.

# Fig.4.

PRIOR ART

Fig.5.